# NEW EUROPEAN PATENT SPECIFICATION

(11) **EP 0 288 112 B2**
(45) Date of publication and mention of the opposition decision: **12.01.2000**
(45) Mention of the grant of the patent: 25.03.1992
(21) Application number: 88200704.0
(22) Date of filing: 12.04.1988
(51) Int. Cl.: B01J 29/08, C10G 47/16, C10G 49/08

(54) **Process for hydrocracking**
Verfahren zum Hydrokracken
Procédé de hydrocraquage

(30) Priority: 14.04.1987 GB 8708962
(43) Date of publication of application: 26.10.1988
(73) Proprietor: SHELL INTERNATIONALE RESEARCH MAATSCHAPPIJ B.V., 2596 HR Den Haag (NL)
(72) Inventor: Klazinga, Aan Hendrik, NL-1031 CM Amsterdam (NL)

(56) References cited:
- EP-A- 0 028 938
- DE-A- 1 952 847
- FR-A- 2 030 800
- US-A- 3 130 007
- US-A- 3 293 192
- US-A- 3 322 690
- US-A- 3 654 185
- US-A- 3 706 694
- US-A- 3 830 725
- US-A- 4 446 008
- Zeolite Chemistry and Catalysts, ACS Monograph 171 (1976) p. 328

## Description

The present invention relates to a process for hydrocracking hydrocarbons using a catalyst comprising a modified zeolite Y.

The use of zeolites as catalysts and/or catalyst carriers has been recognized since long and many methods to improve zeolitic base materials have been reported in the art. In zeolite research and development much attention has been devoted to physically changing the nature and possibly the properties of zeolitic base materials, e.g. by calcining, calcining under so-called self-steaming conditions or by wet calcination. Also the treatment with ammonium-ions in various stages of the zeolite preparation procedures has been reported. It has also been reported that zeolites can be modified by treating them with certain metal salt solutions in combination with various pro and after-treatments to ensure that the zeolites are produced in the most active form. In this respect reference is made to US-A-4,415.519, describing a zeolite modification in which a sodium-type Y zeolite is exchanged with an ammonium salt solution, the ammonium exchanged zeolite is calcined, e.g. in a self-steaming condition, and the calcined product is reacted with an acidic aluminum salt solution. Subsequently, the aluminium-exchanged zeolite is again subjected to ammonium-exchange.

US Patent No. 3 706 694 discloses a catalyst for use in hydrocracking and hydrotreating which comprises a modified zeolite Y prepared by contacting the ammonium or hydrogen form of a zeolite Y as described, for example, in US Patent No. 3 130 007 with an aqueous solution of a polyvalent metal salt, preferably a nickel or cobalt salt, and then calcining the zeolite.

US Patent No. 3 654 185 discloses certain zinc-containing Y zeolites for use in the hydroisomerisation of C₄-C₇ normal paraffins as well as for hydrocracking.

It has now been found that zeolites of the Y-type with interesting properties which can be produced by modifying low alkali oxide-containing zeolites with certain gallium salts followed by a calcination treatment are advantageous in hydrocracking.

The present invention therefore relates to a process for hydrocracking hydrocarbons which comprises contacting the hydrocarbons with a catalyst at a temperature in the range from 250 to 500 °C, a pressure of up to 300 bar and a space velocity between 0.1 and 10 kg feed per litre of catalyst per hour (kg/l.h), wherein the catalyst comprises a modified zeolite Y having a unit cell size between 2.421 and 2.440 nm, a binder and at least one hydrogenation component of a Group 6 metal and/or at least one hydrogenation component of a Group 8 metal, which modified zeolite Y has been prepared by treating a zeolite Y having an alkali oxide/aluminium oxide molar ratio of at most 0.05 and a sodium oxide content of at most 2% by weight with a solution of a gallium (III) salt and calcining the thus treated zeolite.

Zeolites of the Y-type having an alkali oxide/aluminium oxide molar ratio of at most 0.05 and in particular a sodium oxide content of at most 2% by weight can suitably be obtained from high alkali oxide containing Y-zeolites by treatment in one or several stages with an ammonium salt solution to reduce the amount of alkali metal to the desired level. Commercially available zeolites such as Na-Y can be suitably applied as starting materials. Normally. Na-Y zeolites can contain up to 13.5% by weight of sodium oxide. The treatment(s) with an ammonium salt such as ammonium chloride or ammonium sulphate are well known to those skilled in the art.

Salts which can be suitably applied comprise inorganic salts such as nitrates and sulphates as well as the appropriate halides. Preference is given to the use of nitrates and chlorides and in particular to nitrates because of their water solubility which facilitates handling of the materials concerned. It is also possible to use (slightly) soluble salts of organic acids such as formates acetates and propionates. If desired, mixtures of two or more metal salts can be used in the process according to the present invention.

The amount of gallium metal salt to be used can be varied between wide ranges. Normally, solutions containing between 0.005 and 2 moles of metal salt per litre water can be suitably applied, preference being given to concentrations between 0.01 and 1 mole per litre.

The starting zeolite Y material contains at most an alkali oxide/aluminium oxide molar ratio of 0.05 (which may have been obtained by an ion-exchange treatment of a zeolite Y containing a higher amount of alkali oxide). The starting material is normally subjected to an ion-exchange treatment with a solution containing the appropriate metal salt(s). The treatment may be carried out by any technique known in the art. If desired the treatment may be repeated a number of times.

The treatment is normally carried out at a relatively low temperature. e.g. at temperatures between 10 and 95 °C. Good results have been obtained by carrying out the ion-exchange at a temperature between 20 and 95 °C. It will normally be carried out during a time between 15 minutes and 24 hours. Preference is given to a treatment time between 30 minutes and 6 hours.

The modified zeolites Y to be used in the process according to the present invention, having a unit cell size between 2.421 and 2.440 nm (24.21 and 24.40 Å) have substantially the crystallinity performance of the starting zeolite Y, and sometimes an even higher crystallinity compared with the starting material. Normally, materials having a crystallinity of less than 60% of the starting material are not of great interest.

After the treatment with the appropriate metal-ion salt solution the materials thus treated will be normally subjected to drying before final calcination. Drying is normally achieved by gentle heating of the material concerned at a temperature ranging from ambient to about 200 °C. The drying procedure may be carried out in air or by using an inert gas such as nitrogen. Partial drying is also possible depending on the type of final calcination to be applied.

The final calcination is normally performed at temperatures between 350 and 800 °C. Preference is given to a calcination temperature between 500 and 750 °C, in particular between 575 and 725 °C. The calcination can be performed with materials which have been dried substantially, in which case it is preferred to perform the calcination in the presence of added steam, or with materials which have been partially dried. In this latter case the addition of steam may not be necessary depending on the properties of the final material envisaged.

The calcination time way vary between wide ranges, from less than 30 minutes to up to 24 hours, depending predominantly on the properties of the zeolite Y as envisaged. Good results have been obtained by using calcining times of 1 to 2 hours at temperatures between 575 and 725 °C.

The modified zeolites used in the process according to the present invention are used as catalyst carriers together with one or more metal-bearing compositions. Suitable hydrocracking catalysts comprise one or more modified zeolites together with a binder and one or more metals having hydrogenating activities. Binders such as silica, alumina, silica-alumina, clays, zirconia, silica-zirconia and silica-boria can be suitably applied. Alumina is a preferred binder. Suitably 10-95% of binder can be used in the compositions to be used in the present invention. Preferably, 15-50% of binder is used in the present compositions.

In the process of the present invention the catalyst compositions comprise besides a modified zeolite and a binder at least one hydrogenation component of a Group 6 metal and/or at least one hydrogenation component of a Group 8 metal. Suitably, the catalyst compositions comprise one or more components of nickel and/or cobalt and one or more components of molybdenum and/or tungsten or one or more components of platinum and/or palladium.

The amount(s) of hydrogenation component(s) in the catalyst compositions suitably range between 0.05 and 10 parts by weight (pbw) of Group 8 metal component(s) and between 2 and 40 pbw of Group 6 metal component(s), calculated as metal(s) per 100 pbw of total catalyst. The hydrogenation components in the catalyst compositions may be in the oxidic and/or the sulphidic form. If a combination of at least a Group 6 and a Group 8 metal component is present as (mixed) oxides, it will be normally subjected to a sulphiding treatment prior to proper use in hydrocracking.

Feedstocks which can be suitably subjected to a hydrocracking process using catalysts based on modified zeolites in accordance with the present invention comprise gas oils, deasphalted oils, coker gas oils and other thermally cracked gas oils and syncrudes, optionally originating from tar sands, shale oils, residue upgrading processes or biomass. Combinations of various feedstocks can also be applied.

It may be desirable to subject part or all of the feedstock to one or more (hydro)treatment steps prior to its use in the hydrocracking process. It is often found convenient to subject the feedstock to a (partial) hydrotreatment. When rather heavy feedstocks are to be processed it may be advantageous to subject such feedstocks to a (hydro)demetallization treatment.

Suitable process conditions for the hydrocracking process comprise temperatures in the range from 250 to 500 °C, pressures of up to 300 bar and space velocities between 0.1 and 10 kg feed per litre of catalyst per hour (kg/l.h). Gas/feed ratios between 100 and 5000 Nl/kg feed can suitably be used. Preferably, the hydrocracking process is carried out at a temperature between 300 and 450 °C, a pressure between 25 and 200 bar and a space velocity between 0.2 and 5 kg feed per litre of catalyst per hour. Preferably, gas/feed ratios between 250 and 2000 Nl/kg are applied.

Modified Y-zeolites in use in the process according to the present invention are described in the examples 1-3 and a process for hydrocracking is described in example 4.

### EXAMPLE 1

A crystalline alumino-silicate commercially available as LZ-Y-82 (ex Union Carbide) having a typical sodium oxide content of 0.25 %wt, a sodium oxide/aluminium oxide molar ratio of about 0.02 and a unit cell size of 2.456 nm (24.56 Å) was subjected to an ion-exchange treatment with a solution (10 ml per gramme of crystalline alumino-silicate) of 0.2 M gallium nitrate. The ion-exchange treatment was carried out for one hour at a temperature of 95 °C. After filtration, the product obtained was washed and subjected to a drying procedure at 120 °C during 16 hours. Thereafter the product was subjected to a calcination procedure in the presence of steam for a period of one hour at 600 °C. The crystalline alumino-silicate obtained contained a substantial amount of gallium. The unit cell size of the material thus obtained amounted to 2.436 nm (24.36 Å). The crystallinity of the material obtained was at least 72% of that of the starting material (uncorrected for the presence of gallium).

### EXAMPLE 2

The procedure as described in Example 1 was repeated using a calcination temperature of 700 °C. The crystalline alumino-silicate obtained contained a substantial amount of gallium. The unit cell size of the material thus obtained amounted to 2.424 nm (24.24 Å). The crystallinity of the material obtained was at least 66% of that of the starting material (uncorrected for the presence of gallium).

### EXAMPLE 3

The procedure as described in Example 2 was repeated using an ion-exchange treatment with 0.05 M gallium nitrate which was applied twice. The unit cell size of the material thus obtained amounted to 2.425 nm (24.25 Å). The crystallinity of the material obtained was at least 71% of that of the starting material (uncorrected for the presence of gallium).

### EXAMPLE 4

To show the suitability of the modified zeolites as components for hydrocracking catalysts the material of Example 1 was used as catalyst base. It was subjected to ion-exchange with ammonium nitrate. The product was mixed with hydrated aluminium oxide (boehmite), the mixture was extruded to produce extrudates, and the extrudates were dried for 2 hours at 120 °C and finally calcined for 2 hours at 500 °C. The calcined extrudates were impregnated with a solution of nickel nitrate (14 %wt Ni) and ammonium metatungstate (69.5 %wt W). The impregnated extrudates were dried at 120 °C and calcined at 500 °C. The catalyst particles contained 2.6 %wt Ni and 8.2 %wt W calculated as metals on total catalyst. The weight ratio of the modified Y zeolite and the alumina binder was 4:1.

The catalyst was tested in a hydrocracking experiment using a hydrocarbon feedstock having the following characteristics:
C (%wt) :
   86.2
H (%wt) :
   13.8
d (70/4) :
   0.826
viscosity (100 °C) :
   4.87 cS (ASTM-D-445)
viscosity ( 60 °C) :
   12.43 cS (ASTM-D-445)
RCT (%wt) :
   0.05 (ASTM-D-542)
I.B.P. :
   205 °C
10/20 :
   332/370
30/40 :
   392/410
50/60 :
   428/448
70/80 :
   467/492
90 :
   525
F.B.P. :
   598

The catalyst was diluted with 0.2 mm SiC particles on a 1:1 volume ratio. The catalyst was then presulphided. The subsequent hydrocracking was carried out under the following operation conditions:
WHSV :
   1.1 kg.l⁻¹.h⁻¹
H₂S partial pressure :
   1.4 bar
total pressure :
   130 bar
gas/feed ratio :
   1,000 Nlkg⁻¹.
The experiment was carried out in once-through operation.

The catalyst performance is expressed as the temperature required to achieve 70% by weight conversion of 300 ° C⁺ material. The results were as follows:
Temperature required (70 %wt conversion):
   338°C
Distribution of 300 ° C⁻ product (in %wt):
C₁₋₄ : 5
C₅-130 °C : 49
130 ° C-300 °C : 46

## Claims

1. Process for hydrocracking hydrocarbons which comprises contacting the hydrocarbons with a catalyst at a temperature in the range from 250 to 500 °C, a pressure of up to 300 bar and a space velocity between 0.1 and 10 kg feed per litre of catalyst per hour (kg/l.h), wherein the catalyst comprises a modified zeolite Y having a unit cell size between 2.421 and 2.440 nm, a binder and at least one hydrogenation component of a Group 6 metal and/or at least one hydrogenation component of a Group 8 metal, which modified zeolite Y has been prepared by treating a zeolite Y having an alkali oxide/aluminium oxide molar ratio of at most 0.05 and a sodium oxide content of at most 2% by weight with a solution of a gallium(III) salt and calcining the thus treated zeolite.

2. Process according to claim 1, wherein use is made of a solution of a gallium(III) salt having a molarity between 0.005 and 2.

3. Process according to claim 1 or claim 2, wherein the treated zeolite is subjected to a drying treatment at a temperature up to 200 °C.

4. Process according to any one of claims 1 to 3, wherein the treated zeolite is subjected to a final calcination at a temperature between 350 and 800 °C.

## Patentansprüche

1. Verfahren zum Hydrocracken von Kohlenwasserstoffen, welches ein Kontaktieren der Kohlenwasserstoffe mit einem Katalysator bei einer Temperatur im Bereich von 250 bis 500°C, einem Druck von bis zu 300 bar und einer Raumgeschwindigkeit zwischen 0,1 und 10 kg Zuspeisung pro Liter Katalysator je Stunde (kg/l.h) umfaßt, in welchem Verfahren der Katalysator einen modifizierten Zeolithen Y mit einer Elementarzellengröße zwischen 2,421 und 2,440 Nanometer, ein Bindemittel und wenigstens eine Hydrierkomponente aus einem Gruppe 6-Metall und/oder wenigstens eine Hydrierkomponente aus einem Gruppe 8-Metall umfaßt, welcher modifizierte Zeolith Y durch Behandeln eines Zeolithen Y mit einem Alkalioxid/Aluminiumoxid-Molverhältnis von höchstens 0,05 und mit einem Natriumoxidgehalt von höchstens 2 Gew.-% mit einer Lösung eines Gallium(III)salzes und Kalzinieren des so behandelten Zeolithen hergestellt worden ist.

2. Verfahren nach Anspruch 1, worin von einer Lösung eines Gallium(III)salzes mit einer Molarität zwischen 0,005 und 2 Gebrauch gemacht wird.

3. Verfahren nach Anspruch 1 oder Anspruch 2, worin der behandelte Zeolith einer Trocknungsbehandlung bei einer Temperatur von bis zu 200°C unterworfen wird.

4. Verfahren nach einem der Ansprüche 1 bis 3, worin der behandelte Zeolith einer Endkalzinierung bei einer Temperatur zwischen 350 und 800°C unterworfen wird.

## Revendications

1. Procédé d'hydrocraquage d'hydrocarbures qui comprend la mise en contact des hydrocarbures avec un catalyseur à une température dans l'intervalle de 250 à 500°C, une pression allant jusqu'à 300 bars et une vitesse spatiale entre 0,1 et 10 kg d'alimentation par litre de catalyseur par heure (kg/l.h), dans lequel le catalyseur comprend une zéolite Y modifiée ayant une taille de cellule unitaire entre 2,421 et 2,440 nm, un lit et au moins un composant d'hydrogénation d'un métal du Groupe 6 et/ou au moins un composé d'hydrogénation d'un métal du Groupe 8, laquelle zéolite Y modifiée a été préparée en traitant une zéolite Y ayant un rapport molaire oxyde de métal alcalin/oxyde d'aluminium de tout au plus 0,05 et une teneur en oxyde de sodium de tout au plus 2% en poids avec une solution d'un sel de gallium (III) et en calcinant la zéolite ainsi traitée.

2. Procédé suivant la revendication 1, dans lequel on utilise une solution d'un sel de gallium (III) ayant une molarité comprise entre 0,005 et 2.

3. Procédé suivant l'une ou l'autre des revendications 1 et 2, dans lequel la zéolite traitée est soumise à un traitement de séchage à une température allant jusqu'à 200°C.

4. Procédé suivant l'une quelconque des revendications 1 à 3, dans lequel la zéolite traitée est soumise à une calcination finale à une température comprise entre 350 et 800°C.
